# FASCICULE DE BREVET EUROPEEN

(11) **EP 2 438 841 B1**
(45) Date de publication et mention de la délivrance du brevet: **04.06.2014**
(21) Numéro de dépôt: 11182761.4
(22) Date de dépôt: 26.09.2011
(51) Int. Cl.: A47J 43/25, B26D 7/00

(54) **Appareil électroménager de préparation culinaire équipé d'un accessoire de maintien d'outils**
Elektrogerät zur Zubereitung von Speisen, das mit einem Zubehör zur Aufhängung von Küchenwerkzeugen ausgestattet ist
Household cooking appliance provided with a tool-supporting accessory

(30) Priorité: 07.10.2010 FR 1058159
(43) Date de publication de la demande: 11.04.2012
(73) Titulaire: SEB S.A., 69130 Ecully (FR)
(72) Inventeur: Rouyer, Philippe, 65290 Juillan (FR); Lafond, Jean-Marie, 65420 Ibos (FR); Suberbie, Nicolas, 65290 Juillan (FR)
(74) Mandataire: Blanchard, Eugène Gilles

(56) Documents cités:
- EP-A1- 2 159 014
- WO-A1-89/05113

## Description

La présente invention concerne le domaine technique des appareils électroménagers de préparation culinaire comportant un outil de découpe concave agencé dans un logement.

La présente invention concerne notamment les appareils du type précité comportant un outil de découpe cylindrique ou tronconique positionné et actionné en rotation dans un logement pour réaliser une préparation culinaire.

Le document WO 89 05113 divulgue un appareil électroménager de préparation culinaire comportant une base motrice renfermant un moteur électrique, un accessoire de travail comportant un magasin de montage d'outil de découpe, ainsi qu'une bague de retenue montée par baïonnette sur ledit accessoire de travail, cette bague de retenue étant prévue pour retenir l'outil de découpe dans le magasin. Un inconvénient de la réalisation précitée réside dans le montage parfois malaisé de la bague de retenue.

Un objet de la présente invention est d'améliorer la mise en place et le retrait de la bague de retenue d'un appareil du type précité.

Cet objet est atteint grâce à un appareil électroménager de préparation culinaire, comportant une base motrice formée d'un boîtier renfermant un moteur électrique et des moyens électriques de commande dudit moteur, un accessoire de travail solidaire de la base motrice et comportant un magasin de montage d'un outil de découpe, des moyens d'accouplement et d'entraînement en rotation de l'outil de découpe monté dans le magasin de l'accessoire de travail, et une bague de retenue comportant des moyens de blocage sur l'accessoire de travail. Conformément à l'invention, la bague de retenue comporte deux organes d'accrochage agencés de manière opposée, lesdits organes d'accrochage s'étendant à distance d'une paroi annulaire de la bague de retenue et en ce qu'elle présente une flexibilité en compression entre lesdits organes d'accrochage. Ainsi la bague de retenue peut être déformée par pression entre les organes d'accrochage pour écarter ces derniers et faciliter soit la mise en place de la bague sur l'accessoire de travail soit la libération de ladite bague fixée sur cet accessoire de travail.

Avantageusement, les organes d'accrochage présentent des bords d'attaque extérieurs chanfreinés qui permettent un montage sans déformation de la bague, par simple glissement et emboîtement sur le rebord de l'accessoire de l'appareil électroménager.

Avantageusement encore, le magasin de montage d'un outil de découpe présente une bordure circulaire qui facilite un montage de la bague sur l'accessoire sans souci d'orientation ou de positionnement de la bague par rapport à l'accessoire.

Dans une forme préférée de réalisation, la bague de retenue présente deux zones d'appui opposées agencées sur le pourtour de la bague de retenue entre lesdits organes d'accrochage, lesdites zones favorisant l'appui et la flexibilité en compression latérale des côtés de la bague entre les organes d'accrochage.

De préférence encore, les deux zones d'appui opposées comportent des protubérances en relief pour favoriser la déformation de la bague et favoriser un mouvement manuel de pincement latéral de la bague sans glissement des doigts pour faciliter la déformation de ladite bague et son retrait de l'accessoire de l'appareil électroménager.

Diverses autres caractéristiques ressortent de la description faite ci-dessous en référence aux dessins annexés qui montrent, à titre d'exemples non limitatifs, des formes de réalisation de l'objet de l'invention.

Sur les figures annexées :
- la figure 1 représente un appareil électroménager de préparation culinaire conforme l'invention en vue de côté ;
- la figure 2 représente une vue en coupe longitudinale d'une partie de l'appareil représenté à la figure 1 en configuration d'utilisation ;
- les figures 3A à 3C représentent sous différentes vues la bague de retenue de l'appareil électroménager de l'invention dans un mode préféré de réalisation.

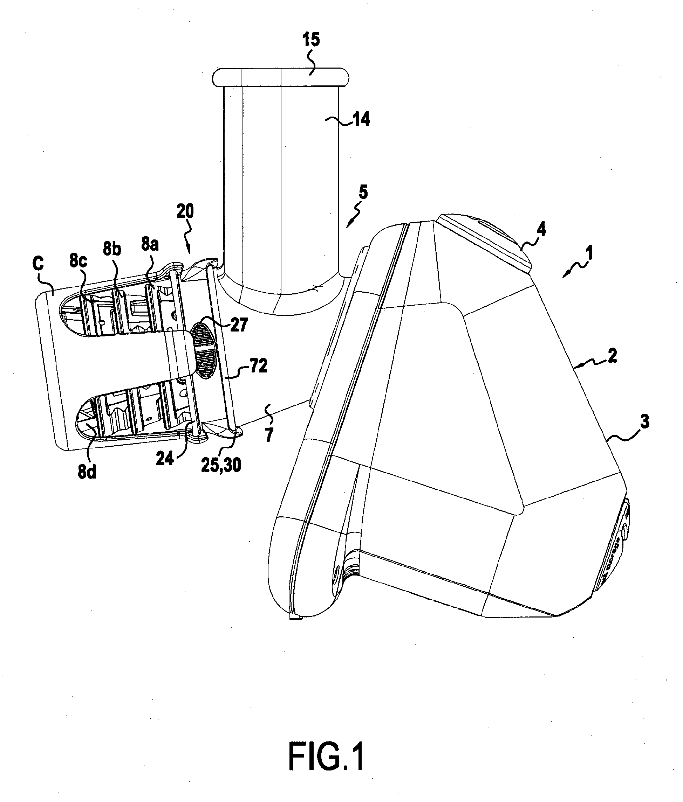

La figure 1 représente un appareil électroménager 1 conforme à la présente invention. Cet appareil électroménager 1 est formé d'une base motrice 2 comprenant un boîtier 3 renfermant un moteur électrique et des circuits électronique de commande du moteur (non représentés) et reliés à des organes de commande tels que des interrupteurs 4 localisés sur le boitier 3 pour permettre la mise en fonction et l'arrêt de l'appareil 1 par un utilisateur.

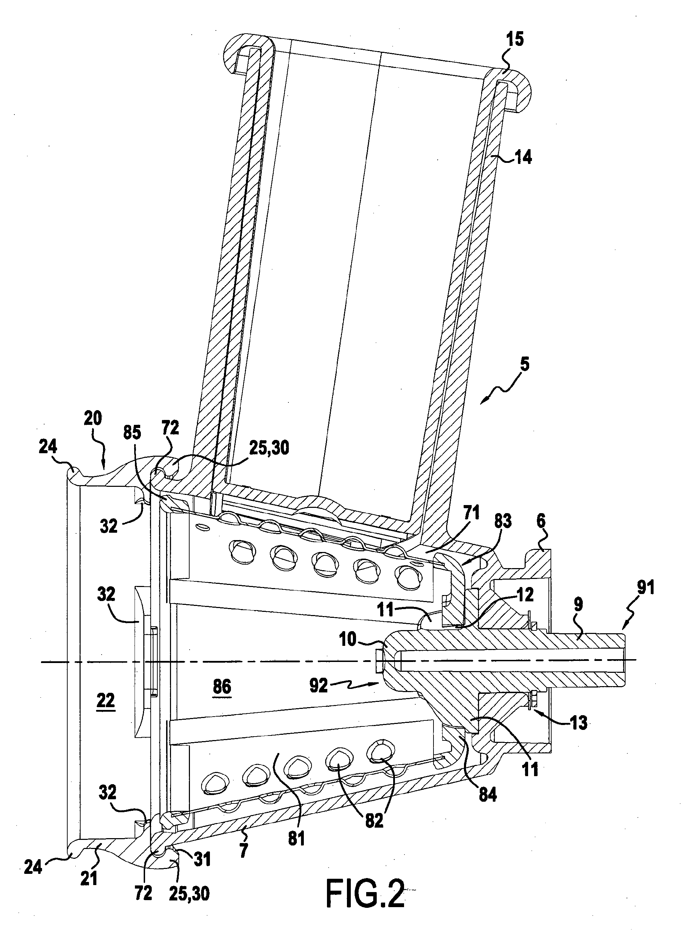

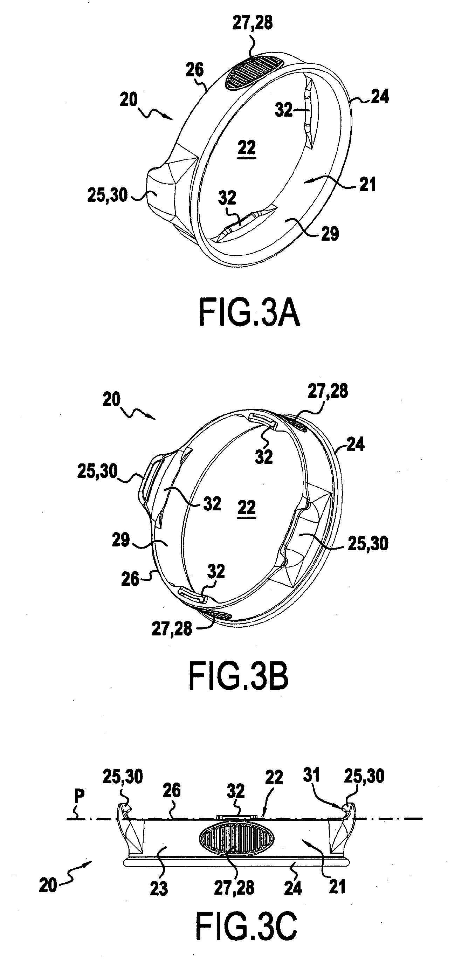

Sur le boîtier 3 est fixé un accessoire de découpe 5, représenté en détail sur les figures 2 et 3, de préférence amovible du boîtier 3 et apte à être fixé sur celui-ci par une bague de fixation 6, notamment à vis ou à baïonnettes. L'accessoire de découpe 5 comporte un magasin 7 délimitant un logement interne 71 de dimensions et formes adaptées pour recevoir et permettre le montage d'un outil de découpe 8 de forme tronconique.

L'outil de découpe 8 comporte un corps 81 de forme tronconique présentant dans sa paroi tronconique des moyens de découpe 82. Le corps 81 présente une première extrémité 83 comportant au moins un moyen d'accouplement et d'entrainement en rotation. Ce moyen d'accouplement et d'entrainement en rotation peut être comme cela ressort de la figure 2 un orifice d'entraînement femelle 12 formé dans une paroi de fond 84 de l'outil de découpe 8. Une deuxième extrémité 85 du corps 81 est ouverte et forme une ouverture de sortie 86 pour les aliments découpés. Le corps 81 de l'outil de découpe 8 est avantageusement réalisé en matière plastique surmoulée sur les moyens de découpe 82 formés par une ou plusieurs tôles métalliques. A titre de variante, l'outil de découpe 8 peut être réalisé en métal embouti.

Comme cela ressort plus particulièrement des figures 2 et 3, un outil de découpe 8 tel que précédemment décrit est adapté pour être monté libre en rotation dans le magasin 7 de l'accessoire de découpe 5 et est apte à être entrainé par un axe d'entraînement 9. Cet axe d'entraînement 9 coopère par une extrémité postérieure 91 avec le moteur électrique localisé dans la base motrice 2 et par une extrémité antérieure 92 avec l'outil de découpe 8. L'accouplement entre l'outil de découpe 8 et l'axe d'entraînement 9 est réalisé de façon avantageuse par l'intermédiaire d'un organe d'accouplement mâle 10 portant des dents 11 adaptées pour engrener l'orifice d'accouplement femelle 12 agencé dans le fond 84 de l'outil 8.

La coaxialité et le positionnement relatifs de l'axe d'entraînement 9 par rapport au magasin 7 et à l'outil de découpe 8 sont assurés par une rondelle de blocage 13 enfilée sur l'axe d'entraînement 9 par son extrémité postérieure 91 et venant buter contre le fond du magasin 7 recevant l'outil de découpe 8.

L'accessoire de découpe 5 comporte également une cheminée 14 d'introduction des aliments à découper. La cheminée 14 est solidaire du magasin 7. La cheminée 14 est formée par un tronçon tubulaire débouchant à ses deux extrémités qui forment respectivement un puits de communication avec l'intérieur du magasin 7 et un orifice d'introduction des aliments à découper dans la cheminée 14. Cette cheminée reçoit un poussoir 15 destiné à pousser les aliments à découper dans la cheminée 14 depuis l'orifice d'introduction vers le puits pour permettre la découpe des aliments par l'outil de découpe 8 entrainé en rotation par l'axe d'entraînement 9 et le moteur électrique à l'intérieur de la base motrice 2 de l'appareil 1 lorsque l'utilisateur actionne l'interrupteur de commande 4.

L'appareil électroménager 1 de l'invention comporte une bague de retenue 20 pour maintenir l'outil de découpe 8 dans le magasin 7 de l'accessoire de travail 5. La bague de retenue 20 est représentée sous différentes vues aux figures 3A à 3C et en positions d'utilisation aux figures 1 et 2. Elle se compose d'un corps 21 annulaire, délimitant en son centre une lumière centrale 22 sensiblement circulaire. Sur la paroi externe 23 du corps annulaire 21, la bague de retenue 20 comporte sur un bord périphérique une lèvre ou bordure 24 protubérante et de préférence sensiblement identique à la bordure antérieure 72 du magasin 7 de l'accessoire de travail 5 de l'appareil électroménager 1. Cette lèvre ou bordure 24 permet le cas échéant la fixation et le blocage d'un capot de verrouillage C maintenant des outils de découpes multiples 8a, 8b, 8c, 8d tel que décrit par exemple dans le document EP 2 159 014 et représenté sur la figure 1 à titre d'exemple.

Toujours sur la paroi annulaire externe 23 du corps 21, la bague 20 comporte également des deux organes d'accrochage 25 agencés de manière diamétralement opposée, lesdits organes d'accrochage 25 s'étendant légèrement à distance de la paroi annulaire externe 23 et du bord périphérique 26 opposé à la bordure 24. On entend ici par "s'étendant à distance" que les moyens d'accrochage 25 sont légèrement décalés du plan P contenant le bord périphérique 26 comme cela ressort de la figure 3C.

Selon une forme de réalisation préférée, les moyens d'accrochage 25 sont constitués par des crochets 30, et présentent des bords d'attaque 31 chanfreinés, qui facilitent l'encliquetage de la bague de retenue 20 par lesdits moyens d'accrochage 25 sur la bordure 72 du magasin 7 de l'accessoire 5 par simple poussée de la bague de retenue 20 sur cette bordure 72, par effet de glissement des bords d'attaque 31 chanfreinés sur les surfaces arrondies de la bordure 72, et déformation élastique des moyens d'accrochage 25 lors du glissement.

Il convient de noter que le diamètre maximal de l'ouverture centrale 22 ménagée par la paroi annulaire 21 de la bague de retenue 20 est égal au diamètre de l'ouverture 71 du magasin 7 de l'accessoire de travail 5 de l'appareil électroménager 1. Ainsi, lorsque la bague 20 est encliquetée sur la bordure 72, la paroi annulaire 21 de la bague de retenue 20 forme un prolongement cylindrique sur le devant du magasin 7, qui peut également constituer un organe déversoir pour les aliments découpés dans un récipient.

Afin de pouvoir être aisément retirée de la bordure 72 du magasin 7, la bague de retenue 20 présente une flexibilité en compression entre les organes d'accrochage 25. Cette flexibilité permet ainsi à un utilisateur de pouvoir appuyer latéralement entre les organes d'accrochage 25 et de déformer ainsi la paroi annulaire 21 pour rapprocher les zones de cette paroi annulaire où l'appui est exercé, ce qui tend concomitamment à écarter les organes d'accrochages 25 l'un de l'autre. Pour user de ce caractère flexible localement de la paroi annulaire 21, la bague de retenue 20 comporte deux zones d'appui latérales 27 localisée chacune en deux positions diamétralement opposées sur la surface externe de la paroi annulaire 21, entre et à égale distance de chacun des organes d'accrochage 25. Ces zones d'appui 27 comportent avantageusement des protubérances 28 en relief, par exemple des bourrelets, qui facilitent un appui digital sans glissement sur ces deux zones, notamment par le pouce et l'index, de manière à déformer légèrement la bague de retenue 20 de manière à provoquer un écartement des organes d'accrochage 25 l'un de l'autre et donc, lorsque la bague de retenue 20 est fixée sur la bordure 72 du magasin 7, la libération et le retrait de la bague de retenue 20 de l'accessoire de travail 5 de l'appareil électroménager 1.

La bague 20 constitue avantageusement un organe de retenue d'un outil de découpe 8 dans le magasin 7 de l'accessoire de travail 5 de l'appareil électroménager afin d'éviter tout glissement dudit outil 8 hors du magasin 7 par l'ouverture 71 de celui-ci. Pour ce faire elle comporte également sur la paroi interne 29 du corps annulaire 21 au moins une, et de préférence au moins deux, butées 32 formant saillies radialement à la paroi interne 29 de la paroi corps annulaire 21 de manière à réduire localement le diamètre de la lumière centrale 22 ménagée au centre du de la paroi annulaire 21 de la bague 20. Ces butées 32, dont le nombre peut bien entendu être plus important et par exemple de trois ou quatre comme représenté sur les figures annexées, préviennent ainsi, lorsque la bague de retenue 20 est fixée sur la bordure 72 du magasin 7, toute avancée de l'outil 8 logé et mu en rotation dans le magasin 7 au travers de l'ouverture 71 lors du fonctionnement de l'appareil électroménager 1.

L'utilisation de l'appareil électroménager 1 de l'invention et son rangement sont particulièrement intuitives. Lorsque l'on veut préparer un plat à base de légumes râpés ou émincés par exemple, il suffit de sortir l'appareil 1 de sa zone de rangement et de poser sa base motrice 2 sur un plan de travail stable. On choisit ensuite un outil de découpe 8 adapté à la préparation que l'on souhaite réaliser. Une fois le bon outil 8 choisi, on monte celui directement dans le magasin 7 en veillant à bien accoupler ledit outil 8 par son orifice d'accouplement avec l'organe d'accouplement mâle de l'axe menant 9 lié au moteur dans la base motrice 2. On vient ensuite encliqueter la bague de retenue 20 par ses crochets 30 sur la bordure 72 du magasin 7 de l'accessoire de travail 5 pour bloquer l'outil 8 dans le logement 71 du magasin 7.

Il suffit alors de brancher l'appareil 1 au secteur électrique par une prise idoine, puis d'introduire les aliments à découper dans la cheminée 14 et de mettre l'appareil en marche en appuyant sur l'interrupteur 4. L'outil 8 monté dans le magasin 7 entre alors en rotation sous l'action de l'axe menant 9 et du moteur et les aliments dans la cheminée 14, poussés le cas échéant par l'utilisateur à l'aide du poussoir 15 sont râpés et/ou émincés par l'outil 8 et déversés par l'orifice d'extrémité antérieur 86 de celui-ci dans un plat ou une assiette.

Une fois les aliments préparés, il convient d'arrêter l'appareil 1, de le débrancher puis de retirer la bague de retenue 20 en appuyant sur les deux zones d'appui 27 pour relâcher les crochets 30, puis de démonter l'outil 8 de l'intérieur du magasin 7 pour le nettoyer, et de nettoyer également le cas échéant l'accessoire 5 si celui-ci est démontable.

La bague de retenue 20 peut ensuite être remise en place sur le magasin 7, pour loger avec le capot de verrouillage C des outils de découpe 8 (non visible sur la figure 1), 8a, 8b, 8c, 8d.

## Revendications

1. Appareil électroménager (1) de préparation culinaire, comportant une base motrice (2) formée d'un boîtier (3) renfermant un moteur électrique et des moyens électriques de commande (4) dudit moteur, un accessoire de travail (5) solidaire de la base motrice et comportant un magasin (7) de montage d'un outil de découpe (8), des moyens d'accouplement et d'entraînement en rotation de l'outil de découpe (8) monté dans le magasin (7) de l'accessoire de travail (5), et une bague de retenue (20) de l'outil cde découpe (8) sur l'accessoire de travail (5), **caractérisé en ce que** la bague de retenue (20) comporte deux organes d'accrochage (25) agencés de manière opposée, lesdits organes d'accrochage s'étendant à distance d'une paroi annulaire (21) de la bague de retenue, et **en ce que** ladite paroi annulaire (21) présente une flexibilité en compression entre lesdits organes d'accrochage (25).

2. Appareil électroménager selon la revendication 1, **caractérisé en ce que** la bague de retenue (20) comporte au moins une butée (32) de blocage d'un outil de découpe (8) dans le magasin (7) de l'outil de travail (5).

3. Appareil électroménager selon la revendication 1 ou 2, **caractérisé en ce que** les organes d'accrochage (25) comprennent des crochets (30).

4. Appareil électroménager selon la revendication 3, **caractérisé en ce que** lesdits crochets (30) présentent des bords d'attaque (31) extérieurs chanfreinés.

5. Appareil électroménager selon l'une des revendications 1 à 4, **caractérisé en ce que** le magasin de montage (7) de l'outil de découpe (8) présente une bordure (72) circulaire.

6. Appareil électroménager selon l'une des revendications 1 à 5, **caractérisé en ce que** la bague de retenue (20) présente deux zones d'appui (27) opposées agencées sur une surface extérieure (29) de la paroi annulaire (21) de la bague de retenue entre lesdits organes d'accrochage (25).

7. Appareil électroménager selon la revendication 6, **caractérisé en ce que** les deux zones d'appui (27) opposées comportent des protubérances (28) en relief.

## Patentansprüche

1. Elektrisches Haushaltsgerät (1) zur Zubereitung von Speisen, umfassend eine Antriebsbasis (2), die von einem Gehäuse (3) gebildet wird, das einen Elektromotor und elektrische Steuermittel (4) des Motors umfasst, ein Arbeitszubehör (5), das mit der Antriebsbasis verbunden ist und eine Lagerung (7) zur Montage eines Schneidwerkzeugs (8) umfasst, Mittel für die Ankupplung und den Drehantrieb des Schneidwerkzeugs (8), das in der Lagerung (7) des Arbeitszubehörs (5) montiert ist, und einen Haltering (20) für das Schneidwerkzeug (8) auf dem Arbeitszubehör (5), **dadurch gekennzeichnet, dass** der Haltering (20) zwei Aufhängelemente (25) umfasst, die gegenüberliegend angeordnet sind, wobei sich die Aufhängelemente in einem Abstand zu einer ringförmige Wand (21) des Halterings erstrecken, und dass die ringförmige Wand (21) eine Kompressionsflexibilität zwischen den Aufhängelementen (25) aufweist.

2. Elektrisches Haushaltsgerät nach Anspruch 1, **dadurch gekennzeichnet, dass** der Haltering (20) mindestens einen Anschlag (32) zur Feststellung eines Schneidwerkzeugs (8) in der Lagerung (7) des Arbeitswerkzeugs (5) umfasst.

3. Elektrisches Haushaltsgerät nach Anspruch 1 oder 2, **dadurch gekennzeichnet, dass** die Aufhängelemente (25) Haken (30) umfassen.

4. Elektrisches Haushaltsgerät nach Anspruch 3, **dadurch gekennzeichnet, dass** die Haken (30) abgeschrägte äußere Angriffsränder (31) aufweisen.

5. Elektrisches Haushaltsgerät nach einem der Ansprüche 1 bis 4, **dadurch gekennzeichnet dass** die Montagelagerung (7) des Schneidwerkzeugs (8) einen kreisförmigen Rand (72) aufweist.

6. Elektrisches Haushaltsgerät nach einem der Ansprüche 1 bis 5, **dadurch gekennzeichnet, dass** der Haltering (20) zwei gegenüberliegende Stützzonen (27) aufweist, die auf einer Außenfläche (29) der ringförmigen Wand (21) des Halterings zwischen den Aufhängelementen (25) angeordnet sind.

7. Elektrisches Haushaltsgerät nach Anspruch 6, **dadurch gekennzeichnet, dass** die beiden gegenüberliegenden Stützzonen (27) reliefartige Ausstülpungen (28) umfassen.

## Claims

1. A household food preparation appliance (1) comprising a driving base (2) formed of a casing (3) enclosing an electric motor and electric means (4) for controlling said motor, an operating accessory (5) secured to the driving base and comprising a housing (7) for mounting a cutting tool (8), means for coupling and driving in rotation the said cutting tool (8) mounted in the housing (7) of the operating accessory (5), and a retaining ring (20) to retain the cutting tool (8) on the operating accessory (5), **characterized in that** the retaining ring (20) comprises two latching members (25) arranged opposite one another, the said latching members extending away from an annular wall (21) of the retaining ring, and **in that** the said annular wall (21) has compressive flexibility between the said latching members (25).

2. The household appliance according to claim 1, **characterized in that** the retaining ring (20) comprises at least one abutment (32) to lock a cutting tool (8) in the housing (7) of the operating tool (5).

3. The household appliance according to claim 1 or 2 **characterized in that** the latching members (25) comprise hooks (30).

4. The household appliance according to claim 3, **characterized in that** said hooks (30) have outer, bevelled leading edges (31).

5. The household appliance according to one of claims 1 to 4, **characterized in that** the housing (7) for mounting the cutting tool (8) has a circular rim (72).

6. The household appliance according to one of claims 1 to 5, **characterized in that** the retaining ring (20) has two opposite-facing bearing regions (27) arranged on an outer surface (29) of the annular wall (21) of the retaining ring between the said latching members (25).

7. The household appliance according to claim 6, **characterized in that** the two opposite-facing bearing regions (27) comprise raised protuberances (28).
